Europäisches Patentamt

European Patent Office

Office européen des brevets

(11) EP 0 840 006 A1

(19)

(12) EUROPEAN PATENT APPLICATION

(43) Date of publication:
06.05.1998 Bulletin 1998/19

(51) Int Cl.6: F03B 1/00, F03B 17/00

(21) Application number: 97830554.8

(22) Date of filing: 29.10.1997

(84) Designated Contracting States:
AT BE CH DE DK ES FI FR GB GR IE IT LI LU MC NL PT SE
Designated Extension States:
AL LT LV RO SI

(30) Priority: 04.11.1996 IT RM960757

(71) Applicants:
• Facchiano, Giovanni
00121 Ostia Lido (RM) (IT)

• Garau, Alessandro
00122 Ostia Lido (RM) (IT)
• Bartoletti, Francesco
00143 Roma (IT)

(72) Inventor: Facchiano, Giovanni
00121 Ostia Lido (RM) (IT)

(74) Representative: Iannone, Carlo Luigi et al
Ing. Barzanò & Zanardo Roma S.p.A.
Via Piemonte, 26
00187 Roma (IT)

(54) Prime mover

(57) The present invention concerns a system for the production of electrical and/or mechanical power comprising at least one reservoir (1) provided with an inlet sealing valve (4) and an outlet sealing valve (5) and with an upper and lower coupling and releasing hydraulic system, said reservoir (1) being placed rotating about a central transverse rotation axis (6), a piston (3) slidable without said reservoir, feeding means (3)for the liquid (2) coming from the above by gravity to the inlet sealing valve (4) of said reservoir (1) and outlet means (8) for the pressurised liquid (2) from said outlet valve (5) and connected to a power generation plant (9).

FIG. 2

EP 0 840 006 A1

## Description

The present invention concern a system for the production of electrical and/or mechanical power.

More particularly, the invention concerns a system of the above kind exploiting the difference of specific weights to produce electrical and/or mechanical power.

As it is well known, different kind of power exist, such as water power, mechanical power, electric power, thermal power, magnetic power, nuclear power, chemical power, etc.

In any plant realised to exploit power, aside from the kind of energy involved, each transformation of power involves losses due to the exchange motion, with the consequent efficiency reduction.

Only for the production of water power and nuclear power, only a high cost for the realisation of the plant exist, without the need of having large amount of fuel.

On the contrary, for all the other kind of power, it is necessary a liquid, solid or gaseous fuel, so that the power production is very expensive.

Water power production plants are surely the best under an ecological and economical viewpoint, (particularly after having depreciated the very high initial realisation costs), but have the drawback that it is possible to realise them only in determined zones where a natural predisposition exists for exploiting the natural resources.

Instead, nuclear plants are very expensive and potentially very dangerous.

Furthermore, this kind of plant produces radioactive slags difficult to be discharged.

In this situation it is included the system suggested according to the present invention, the system being optimal under the ecological viewpoint, being safe and not polluting, without the production of radioactive slags.

Furthermore, the solution suggested according to the present invention does not require the use of fuel, and can be placed in any position.

These and other results are obtained according to the present invention by the exploitation of the water pressure and/or other suitable liquid, as occur in any water plant, without the need of a water fall usually obtained by a dam.

It is therefore specific object of the present invention a system for the production of electrical and/or mechanical power comprising at least one reservoir provided with an inlet sealing valve and an outlet sealing valve and with an upper and lower coupling and releasing hydraulic system, said reservoir being placed rotating about a central transverse rotation axis, a piston slidable without said reservoir, feeding means for the liquid coming from the above by gravity to the inlet sealing valve of said reservoir and outlet means for the pressurised liquid from said outlet valve and connected to a power generation plant.

Preferably, according to the invention, a plurality of reservoir is provided, connected in parallel, using the same liquid feeding means and the same liquid outlet means.

According to the invention, said piston can be filled in with a metal, preferably mercury or with a material having a specific weight allowing a positive energy production.

Furthermore, according to the invention, said plant can be realised as a closed circuit or can exploit a suitable level of a river sloping, placing the power generation plant on the part of the lower dead point and letting the liquid coming out directly from the discharge, a difference in height between 2 m and 10 m being necessary.

Still according to the invention, said compression piston can be made up of any metallic material, having a specific weight not lower than 5.7.

The present invention will be now described, for illustrative but not limitative purposes, according to its preferred embodiments, with particular reference to the figures of the enclosed drawings, wherein:

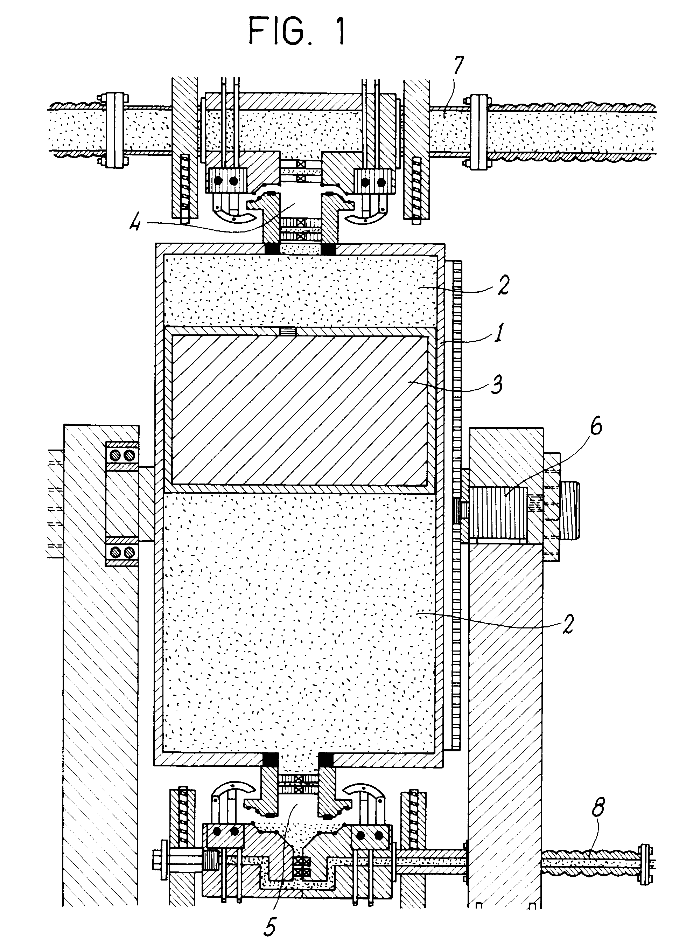

figure 1 is a section schematic view of a plant according to the invention; and

figure 2 is a section schematic view of an embodiment of the plant according to the invention.

It must be at first pointed out that the plant according to the invention can be realised in such a way to include, according to the needing, a different number of single elements with respect to the solution shown, without departing from the scope of the invention.

The solution suggested according to the present invention exploits a transformation system similar to the one of a waterpower plant. However, in this case, pressure is exerted within a reservoir 1, wherein the water 2 and/or other suitable liquid, is compressed by the weight of a piston 3, made up of steel or other suitable material.

Upward and downward the reservoir an inlet sealing valve 4 and an outlet sealing valve 5, are provided, for the connection and the insulation of the inlet and/or outlet of the reservoir with respect to the feeding and discharge of the water 2.

Said reservoir 1 is centrally pivoted on pin 6, in such a way to be possible to rotate the same on the basis of the different operative steps of the plant.

Upward the valve 4, a water intake duct 7 is provided, while downward the valve 5 an extraction duct is provided, for the extraction of water after its compression by the piston 3.

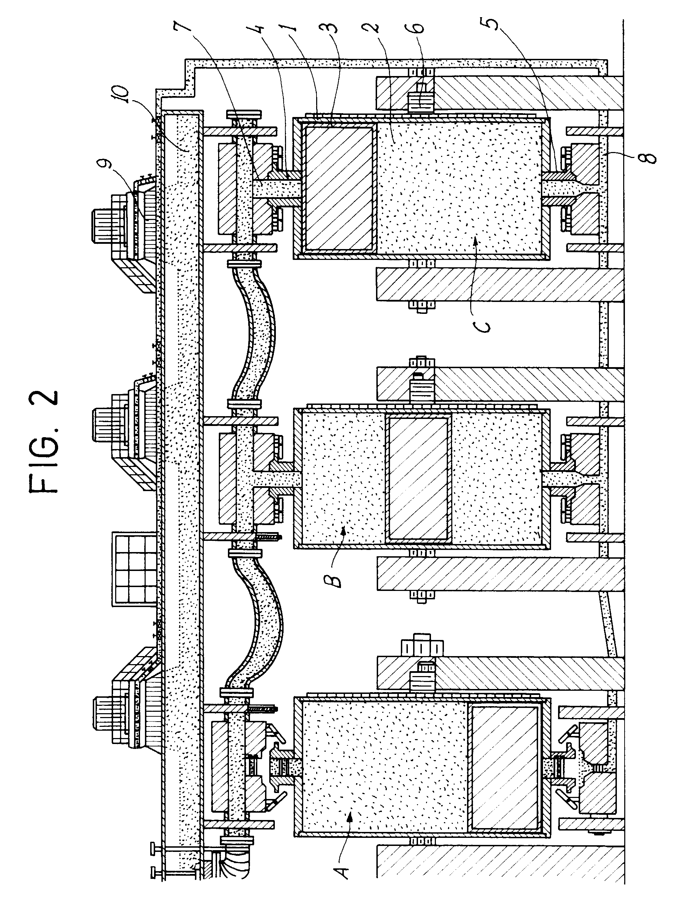

Observing now figure 2, it can be noted an illustrative plant according to the invention, providing three reservoirs 1, connected in parallel each other, fed by the same duct 7 and using the same discharge duct 8.

Upward the duct 7, turbines 9 discharging liquid (water) after its exploitation, within the channel 10 communicating with duct 7.

In figure 2, three different positions, respectively A, B and C, of the reservoirs 1 are shown.

reservoir 1A has valve 4 open, valve 5 closed and piston 3 at the bottom dead centre. It is ready for the closure of valve 4 and thus for the rotation about the pin 6 for the beginning of a new cycle.

Instead, reservoir 1B has both valves 4 and 5 open and the piston 3 is compressing the liquid in the lower part of the reservoir 1, letting it exiting through the duct 8 to reach turbines 9.

Reservoir 1C has the piston 3 at the top dead centre, immediately after the rotation of the reservoir, ready for a new thrust.

Piston 3, made up of steel or other suitable material, slides without any outer compression, in view of the fact that its specific weight can reach 22.5 - 5.7 $\times$ dm$^3$, thanks to the filling of the piston 3 (the piston being hermetically closed) with mercury, or other suitable metal with a high specific weight.

Pressure within the reservoir 1 containing water and/or another liquid, will vary in function of the mercury or other metallic material piston dimensions, thus increasing the power amount to be delivered, as it will be evident from the calculation set forth in the following.

Piston 3 ends its cycle when reaches the bottom dead centre, but the following reservoir 1 immediately operates. As already said, each reservoir 1 is provided with an upper hydraulic valve 4 and with a lower hydraulic valve 5, with the relevant closure solenoid valves, and hydraulic coupling systems.

Therefore, once finished water or liquid under piston 3, solenoid valves are closed and inlet and outer water flanges are hydraulically released.

It must be pointed out that while piston 3 thrusts water or liquid exiting from the lower portion toward the upper portion, reservoir 1 is filled in thanks to a direct connection with a liquid or water stock tank 10, provided over the reservoir 1, connected with the duct 7.

Now, a ratiomotor is operated, revolving the reservoir of an angle of 180°, thus bringing the piston 3 at the upper dead centre. Immediately, flanges are coupled and the solenoid valves are opened in such a way that a new cycle is ready.

The rate of the cycle can be of 15 - 45 seconds, depending on the power necessary, with outlet rate of water or other liquid of 10 seconds. The system according to the invention can provide more than 8 reservoirs, being it possible to produce a variable power.

In the following some examples, as well as the relevant calculations, will be provided for illustrative and not limitative purposes, for plants according to the invention.

The basic data of the embodiments employed in the different examples are the following:

Total amount of water: 12,560 l

If the content of water at the beginning is of 12,560 l, the initial level is at a height:

$$h = \frac{volume}{Surface} = \frac{12560}{314} = dm\ 40\ m\ 4$$

The vertical tube provided at the outlet of the reservoir, due to the effect of the water contained by the same, creates a counter-pressure of 3 m of column of water, almost corresponding to about 0.3 bar, i.e. 30 kg/dm$^3$.

Therefore, the piston in view of its weight descends from the initial level up to the bottom of the reservoir and at the same time must overcome the force due to the counter pressure. Said force is equal to:

F x 30 x 314= 9140 kg = 94200 N = force of the counter pressure directed upward.

The resulting force making the piston descending is equal to:

25,622 - 9,240 = 16,202 kg = 162,020 N

and it is directed downward.

This force makes a work corresponding to the multiplication of force $\times$ displacement

L x F x s = 162,20 x 4 = 648,080 Nm

If this work is executed within a time of 60 seconds, it results that the power obtained is

$$POT = \frac{L}{t} = \frac{648,080}{60} = 10801.3 \ W = 10.801 \ Kw$$

The present invention has been described for illustrative but not limitative purposes, according to its preferred embodiments, but it is to be understood that modifications and/or changes can be introduced by those skilled in the art without departing from the relevant scope as defined in the enclosed claims.

**Claims**

1. System for the production of electrical and/or mechanical power, characterized in that it comprises at least one reservoir provided with an inlet sealing valve and an outlet sealing valve and with an upper and lower coupling and releasing hydraulic system, said reservoir being placed rotating about a central transverse rotation axis, a piston slidable without said reservoir, feeding means for the liquid coming from the above by gravity to the inlet sealing valve of said reservoir and outlet means for the pressurised liquid from said outlet valve and connected to a power generation plant.

2. System according to claim 1, characterized in that a plurality of reservoir is provided, connected in parallel, using the same liquid feeding means and the same liquid outlet means.

3. System according to one of the preceding claims, characterized in that said piston is filled in with a metal.

4. System according to claim 3, characterized in that, said piston is filled with mercury, or another metal or alloy.

5. System according to claim 1 or 2, characterized in that said piston is filled with a material having a specific weight allowing a positive energy production.

6. System according to one of the preceding claims, characterized in that said liquid is comprised of water or other not-inflammable liquid.

7. System according to one of the preceding claims, characterized in that said plant is realised as a closed circuit.

8. System according to one of the preceding claims, characterized in that said plant exploits a suitable level of a river sloping, placing the power generation plant on the part of the lower dead point and letting the liquid coming out directly from the discharge, a difference in height between 2 m and 10 m being necessary.

9. System according to one of the preceding claims, characterized in that said compression piston is made up of any metallic material, having a specific weight not lower than 5.7.

10. System for the production of electric and/or mechanical power according to any one of the preceding claims, substantially as illustrated and described.

# FIG. 1

FIG. 2

European Patent
Office

**EUROPEAN SEARCH REPORT**

Application Number

EP 97 83 0554

## DOCUMENTS CONSIDERED TO BE RELEVANT

| Category | Citation of document with indication. where appropriate, of relevant passages | Relevant to claim | CLASSIFICATION OF THE APPLICATION (Int.Cl.6) |
|---|---|---|---|
| A | FR 726 533 A (S.R.SEILLERE) 30 May 1932 <br> * page 2, line 1 - line 14; figure 4 * <br> --- | 1 | F03B1/00 <br> F03B17/00 |
| A | PATENT ABSTRACTS OF JAPAN <br> vol. 009, no. 297 (M-432), 25 November 1985 <br> & JP 60 135681 A (MITSUBISHI JUKOGYO KK), 19 July 1985, <br> * abstract * <br> --- | 1 | |
| A | GB 2 286 432 A (MCQUEEN JOHN CORBET) <br> * abstract * <br> * page 4, line 11 - line 22 * <br> ----- | 1 | |

| | TECHNICAL FIELDS SEARCHED (Int.Cl.6) |
|---|---|
| | F03B <br> F04B <br> F03G |

The present search report has been drawn up for all claims

| Place of search | Date of completion of the search | Examiner |
|---|---|---|
| THE HAGUE | 13 February 1998 | Criado Jimenez, F |

EPO FORM 1503 03.82 (P04C01)